(19) Europäisches Patentamt

European Patent Office

Office européen des brevets

(11) **EP 4 632 363 A1**

(12) **EUROPEAN PATENT APPLICATION**

(43) Date of publication:
**15.10.2025 Bulletin 2025/42**

(21) Application number: **24169034.6**

(22) Date of filing: **08.04.2024**

(51) International Patent Classification (IPC):
*G01N 23/22* (2018.01)

(52) Cooperative Patent Classification (CPC):
**G01N 23/22;** G01N 2223/07; G01N 2223/1016

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Malvern Panalytical B.V.
7602 EA Almelo (NL)**

(72) Inventor: **Zarkadas, Charalampos
7602 EA Almelo (NL)**

(74) Representative: **Elkington and Fife LLP
Prospect House
8 Pembroke Road
Sevenoaks, Kent TN13 1XR (GB)**

(54) **ITERATIVELY CALCULATED COMPLEMENTARY BACKGROUND FITTING**

(57) There is provided a method of analysis of detected X-ray spectra in an instrument, comprising applying a first iteration of a first background algorithm to the detected X-ray spectrum to determine a first partial background spectrum, subtracting the first partial background spectrum from the detected X-ray spectrum to form a first net spectrum, applying a second iteration of a second background algorithm to the first net spectrum to determine a second partial background spectrum wherein the second background algorithm is different from the first background algorithm, forming an estimated background spectrum comprising linear combination of the first partial background spectrum and the second partial background spectrum and using the estimated background spectrum as an input into a deconvolution model.

10 → Measure spectrum

11 → Apply first background algorithm

12 → Subtract first background spectrum

13 → Apply second background algorithm

14 → Estimate background specturm using first and second partial background spectrum

15 → Use background spectrum in deconvolution to determined net intensities

**FIG. 1**

EP 4 632 363 A1

# Description

## Field of Invention

The invention relates to a method of analysis of X-ray spectra such as those obtained by energy dispersive or wavelength dispersive spectroscopy and to related apparatus and computer program products.

## Background to the Invention

In order to obtain a quantitative analysis of a sample, it is necessary to provide an accurate quantitative determination of the characteristic X-ray fluorescent line intensities emitted by the sample's elements. In an energy dispersive measurement, and due to the limited detector resolution, the detected characteristic lines will form a spectrum, which, in the most general case, comprises of overlapping, gaussian-like peaks. The intensity of each characteristic line will be proportional to the area of its corresponding peak. In addition, the measured X-ray spectrum will also include a background component under the peaks, due to scattered radiation of the excitation source. For quantitative analysis, the peak net areas are required, i.e. the net area of the relevant peak, after background radiation and contributions of other overlapping peaks have been taken into account.

Consequently, analysis of energy dispersive (ED) as well as wavelength dispersive (WD) spectra often involves an estimate of the background spectrum. For ED spectra, once the background spectrum has been calculated, the measured spectrum and the precalculated background spectrum are used as inputs in a deconvolution process to extract the peaks net intensities. Alternatively, instead of a precalculated background, an analytical function or another measured spectrum, or part of a spectrum, can be used as the background component and fitted with the peaks during the deconvolution process.

Consequently, an accurate estimate of the background spectrum allows an accurate quantitative analysis to be executed.

Different algorithms can be used to estimate the background spectrum. A popular algorithm is the sensitive non-linear peak clipping (SNIP) algorithm, which is fast, and easy to implement. Although the SNIP algorithm generally provides a good background estimate, a drawback is that the estimate tends to be more inaccurate in the presence of broad continuum background features such as those produced by scattering of bremsstrahlung radiation from low Z matrices. In these instances, the SNIP algorithm tends to underestimate the background radiation.

Alternative algorithms for estimating the background radiation rely on the use of iteratively fitted orthogonal polynomials of a predefined degree (Steenstrup 1981). However, a disadvantage of polynomial fitting is that it can result in significant fluctuations, particularly if higher order polynomials are applied.

It would therefore be desirable to develop an improved and more accurate method of determining the background component prior to deconvolution and extraction of net peak intensities.

## Summary

According to the invention there is provided a method of analysis of detected X-ray spectra in an instrument, comprising:

applying a first iteration of a first background algorithm to the detected X-ray spectrum to determine a first partial background spectrum;
subtracting the first partial background spectrum from the detected X-ray spectrum to form a first net spectrum;
applying a second iteration of a second background algorithm to the first net spectrum to determine a second partial background spectrum wherein the second background algorithm is different from the first background algorithm;
forming an estimated background spectrum comprising linear combination of the first partial background spectrum and the second partial background spectrum
using the estimated background spectrum as an input into a deconvolution model to extract the net intensities.

Optionally, each of the first background algorithm and the second background algorithm are one of a sensitive non-linear peak clipping algorithm, iteratively fitted orthogonal polynomials or an exponential polynomial fitting function or a a set of cardinal cubic B-spline fitting functions.

The method may further comprise:

subtracting the second partial background spectrum from the first net spectrum to form a second net spectrum;
applying a third iteration of a third background algorithm to the second net spectrum to determine a third partial background spectrum,
wherein the estimated background spectrum comprises a linear combination of the first partial background spectrum, the second partial background spectrum and the third partial background spectrum.

The estimated background spectrum may comprise a linear combination of the first partial background radiation and the second partial background radiation with a background fitting function, the background fitting function comprising at least one of one of a linear polynomial, an exponential polynomial and a cubic spline.

According to a second aspect of the invention there is provided a computer program product for measuring X-ray spectra, the computer program product adapted, when run on a computer connected to and controlling an instrument to carry out the steps of:

applying a first iteration of a first background algorithm to the detected X-ray spectrum to determine a first partial background spectrum;

subtracting the first partial background spectrum from the detected X-ray spectrum to form a first net spectrum;

applying a second iteration of a second background algorithm to the first net spectrum to determine a second partial background spectrum wherein the second background algorithm is same or different from the first background algorithm;

forming an estimated background spectrum comprising linear combination of the first partial background spectrum and the second partial background spectrum

using the estimated background spectrum as an input into a deconvolution model to extract the net intensities..

According to a third aspect of the invention there is provided an apparatus for measuring X-ray spectra, the apparatus comprising an instrument for measuring X-ray scattering and a controller arranged to control the instrument to carry out the steps of:

apply a first iteration of a first background algorithm to the detected X-ray spectrum to determine a first partial background spectrum;

subtract the first partial background spectrum from the detected X-ray spectrum to form a first net spectrum;

apply a second iteration of a second background algorithm to the first net spectrum to determine a second partial background spectrum wherein the second background algorithm is same or different from the first background algorithm;

form an estimated background spectrum comprising linear combination of the first partial background spectrum and the second partial background spectrum

using the estimated background spectrum as an input into a deconvolution model to extract the net intensities..

## Brief description of the drawings

For a better understanding of the invention, the invention will now be described purely by way of example, with reference to the accompanying drawings in which:

Figure 1 is a flow diagram of an embodiment of a method according to the invention;
Figure 2 illustrates a detected spectrum and first partial background spectrum;

Figure 3 illustrates a net spectra after the first partial background spectra is subtracted;
Figure 4 depicts a second partial background spectrum;
Figure 5 illustrates a combined background spectrum;
Figure 6 is a highly schematic representation of an embodiment of an apparatus;
Figure 7 depicts some spectra in accordance with the invention;
Figure 8 depicts some spectra in accordance with the invention;
Figure 9 depicts some spectra in accordance with the invention;
Figure 10 depicts some spectra in accordance with the invention;
Figure 11 depicts some spectra in accordance with the prior art; and
Figure 12 depicts some spectra in accordance with the invention.

## Detailed description

For a better understanding specific embodiments will now be described, purely by way of example.
Calculation of background spectra is one of the steps employed in the qualitative analysis of X-ray spectra. By determining an accurate background spectrum accurate net intensities can be calculated. Sometimes, where net peak intensities are obtained by means of deconvolution, background calculation is usually performed in advance and the computed background component is kept fixed. Alternatively, the background component can be introduced in the form of an analytical function and fitted simultaneously with the peaks.
Apart from the measured and predefined background spectrum, deconvolution, requires in addition, a number of line groups to be defined. Definition of line groups in turn, process via the identification of the elements which emitted the characteristic fluorescent lines that resulted in the observed peaks in the measured spectrum.
In automated industrial XRF analysis, line groups and elements are defined after a peak search / peak match process. In a peak search process, peak-like structures are identified, and flagged as candidate peaks. Rejection or acceptance of these peaks involves several criteria, with peak significance being one of them. Peak significance is usually defined as the ratio of the peak height to the precalculated background.
Evidently, a poorly calculated background spectrum will result into false positives (more peaks) or false negatives (fewer peaks) being identified. Both cases will have a negative impact on the subsequent match process. An excess or lack of elements will be observed, leading to a deconvolution model which deviates significantly from the optimal one. In combination with the under, or overestimated background, the deconvolution process will return inaccurate net intensities. These intensities along with the corresponding elements are the input for the quantification process. Therefore, proper determination of the background can be a decisive factor for the final quantitative analysis.

There are several different background calculation algorithms, the most popular of which is the sensitive non-linear peak clipping (SNIP) algorithm which is fast, robust and easy to implement. It generally gives a good approximation of the background spectrum. However, it tends to underestimate the actual background in the presence of broad continuum features such as those produced by scattering of continuous radiation from low Z matrices.

Alternative algorithms for estimating the background radiation rely on the use of iteratively fitted orthogonal polynomials (Steenstrup S. J Appl Crystallogr 14:226, 1981). However, a disadvantage of polynomial fitting is that it can result in significant fluctuations, particularly if higher order polynomials are applied.

As an alternative, a linear polynomial function and exponential polynomial or set of cubic splines could equally be used.

A further alternative is the use of a (previously) measured background spectrum, or part of a spectrum, as a partial background spectrum.

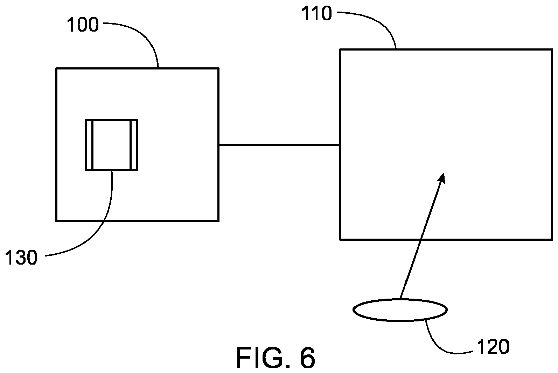

Referring to Figure 6, an embodiment includes XRF measurement apparatus 110 into which a sample or samples 120 may be inserted for measurement. The XRF measurement apparatus is connected to a controller 100 which contains a computer program product 130 for controlling the controller 100 and in turn measurement apparatus 120. The XRF measurement apparatus 110 in this embodiment is commercially available XRF measurement apparatus and so will not be described further.

It should be noted that Figure 6 is highly schematic and the controller 110 may be, for example within the casing of the measurement apparatus 100. The computer program product 130 may include multiple separate programs. Further, those skilled in the art will realise that the controller 100 may include one or more processors, data storage, and networks.

Embodiments provide a way of removing background spectra to leave the intensities of the sample itself.

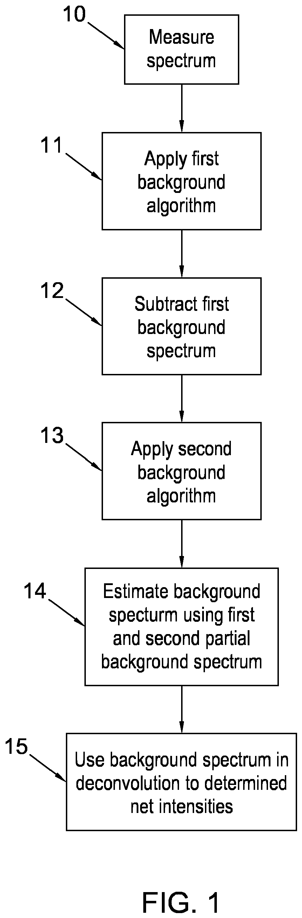

In a first step 10 (see Figure 1), a sample is placed in measurement apparatus and a spectrum is measured. The intensity values are recorded as a function of energy, in a number of contiguous energy bands, creating a spectrum of measured intensity values over a plurality of bins, each bin corresponding to an energy range.

In a second step 11, a first background algorithm is applied to the detected spectrum. In one embodiment this may be a SNIP algorithm. The first algorithm determines a first partial background spectrum.

In a third step 12 the first partial background spectrum is subtracted from the detected spectrum. A second background algorithm is then applied to the resulting spectrum at step 13. Preferably the second background algorithm is a different algorithm from the first background algorithm. Examples of background algorithms are iteratively applied orthogonal polynomials exponential polynomials and cubic splines. By using different background algorithms in a complementary manner the advantages of both background algorithms can be harnessed.

The background spectrum is then estimated 14 using the first and second partial background spectra. Finally, the detected spectrum is deconvolved 15 using as input the estimated background spectra determined in the previous steps. This reveals the net intensities of the peaks.

Prior to the deconvolution process, elements and their lines can be determined by comparing the peaks' positions (energies or wavelengths) to those of existing libraries. The elements and their lines are also used as input into the deconvolution process.

Using both the SNIP algorithm to determine a first partial background spectrum and another algorithm, for example, the iterative orthogonal polynomial fitting to determine a second partial background spectrum results in a total background spectrum of:

$$B(i) = SNIP(i) + \sum_{k=0}^{n} a_k P_k(i)$$

Thus, the SNIP function covers the largest part of background variation while the additional fitting function acts as a refining term.

The degree of polynomial, k, is a free parameter and can be set by the user to a fixed value, or be automatically detected depending on the significance of the next term In addition, it could be increased by one, after a preset increase in the number of bins included in the region of interest.

The estimation of the background spectrum is a combination of the first and second partial background spectra. However, this can be achieved in a number of ways.

Both the first and second partial background spectra can be added and kept fixed during the deconvolution: this is the simplest implementation. As a variation, both the first and second partial background spectra can be added but each with its own scale parameter.

In an alternative implementation the first partial background spectrum can be fixed and the linear polynomial of the second partial background spectrum can be refined during deconvolution.

As a further alternative, background components from both determinations can be summed and linear polynomial refinement applied with a polynomial of maximum third degree during deconvolution.

Alternatively, the total background can be fitted with a non linear fitting function and the determined parameters applied as start values with appropriate constraints during deconvolution.

In summary, any linear combination of the partial background spectra components can with any suitable background fitting function (linear polynomial, exponential polynomial, cubic splines....) be used, where in the most general case the fitting function is introduced either as a summing or as multiplication term.

Examples

In the example first presented below, a typical spectrum is used , corresponding to a geological sample.

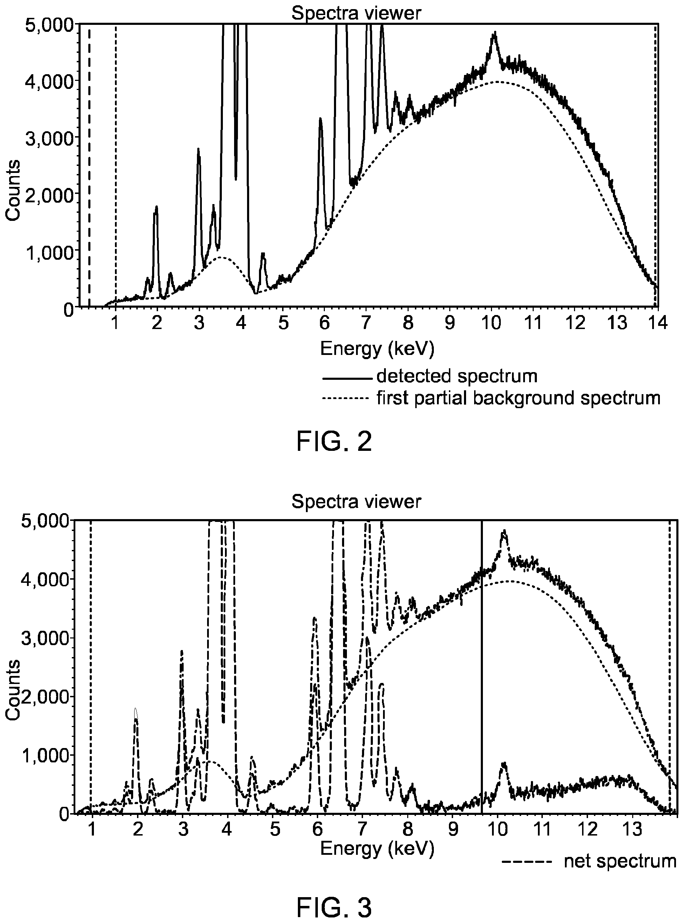

Figure 2 depicts a detected spectrum, with a plurality of peaks. A SNIP algorithm is then applied to the spectrum and the first partial background spectrum is shown as a smooth function. However, as can be seen, the background spectrum is underestimated at higher energies. This is because the SNIP algorithm is less good at describing globally narrow and broad spectrum background features.

The first partial background spectrum, detected in the earlier step, is then subtracted from the detected spectrum to generate a net spectrum and this is shown in Figure 3.

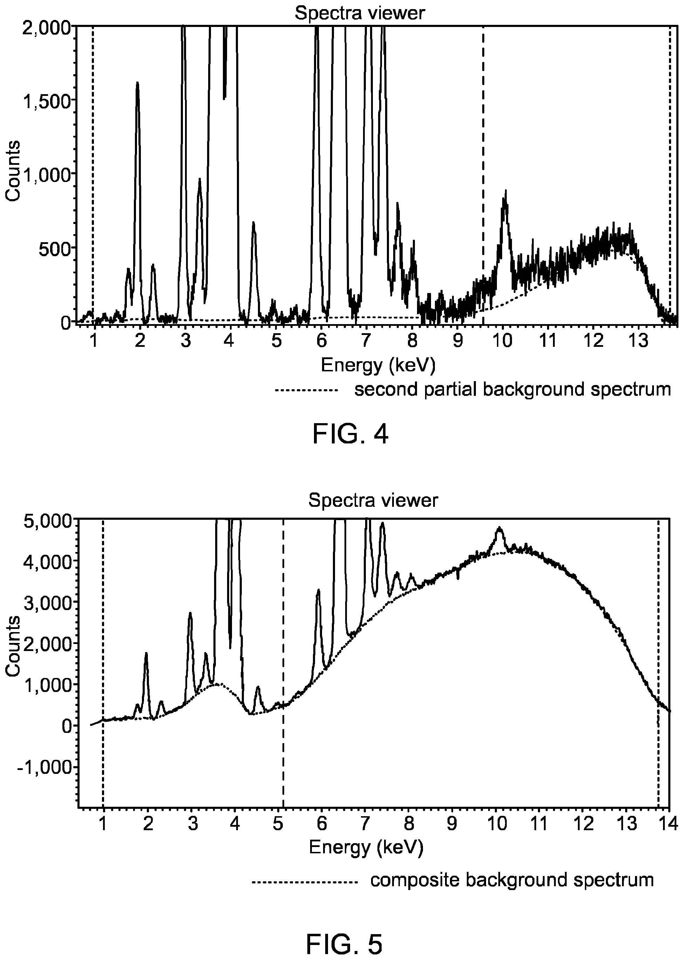

Next, a second background algorithm is applied to the net spectrum to generate a second partial background spectrum. In this example, the iterative orthogonal polynomial fitting algorithm is applied and the resulting second partial background spectrum is shown in Figure 4 (using a different scale from earlier figures).

Figure 5 illustrates the combined background spectrum combined using a linear combination of a SNIP algorithm and the resulting background spectrum after iterative orthogonal polynomial fitting algorithm Also shown in Figure 5 are the residuals after the deconvolution process.

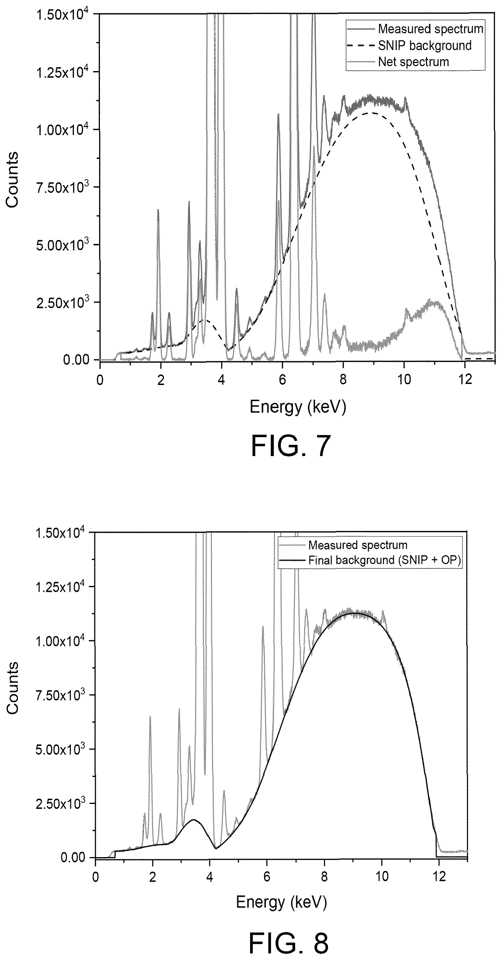

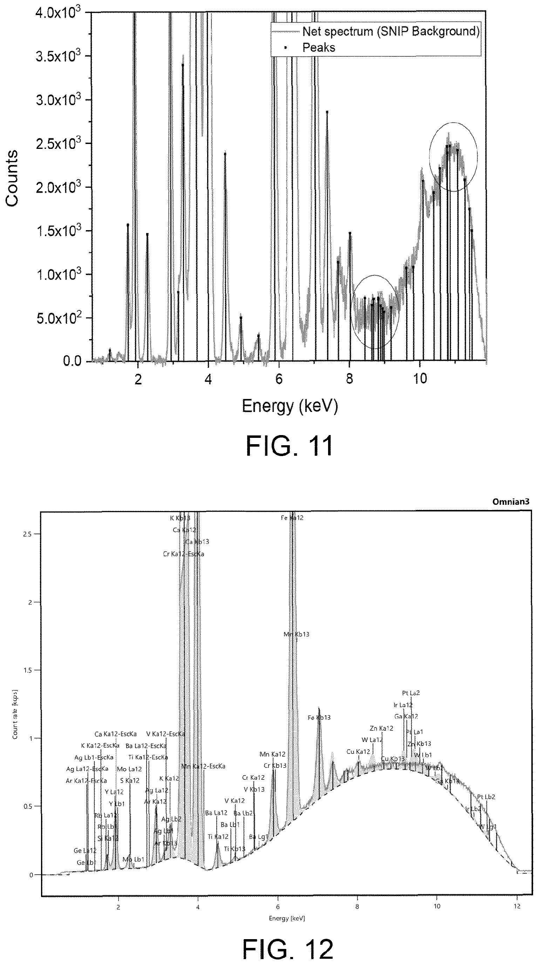

Figures 7 to 10 depict spectra processed in accordance with the invention and, as a contrast, Figures 11 and 12 depict spectra processed according to the prior art.

Figure 7 depicts a measured spectrum, the first partial background calculated using the SNIP algorithm and the net spectrum after the background has been subtracted. As can be seen there is an undercalculation of the background radiation over keV.

A second background algorithm is then applied to the net spectrum to generate a second partial background spectrum. In this example, the second background algorithm is iterative orthogonal polynomials. An estimated background spectrum is then formed of the first partial background spectrum and a second partial background spectrum. Figure 8 depicts the estimated background spectrum and the measured spectrum. As can be seen, the estimated background spectrum provides a very good global estimation of the background radiation.

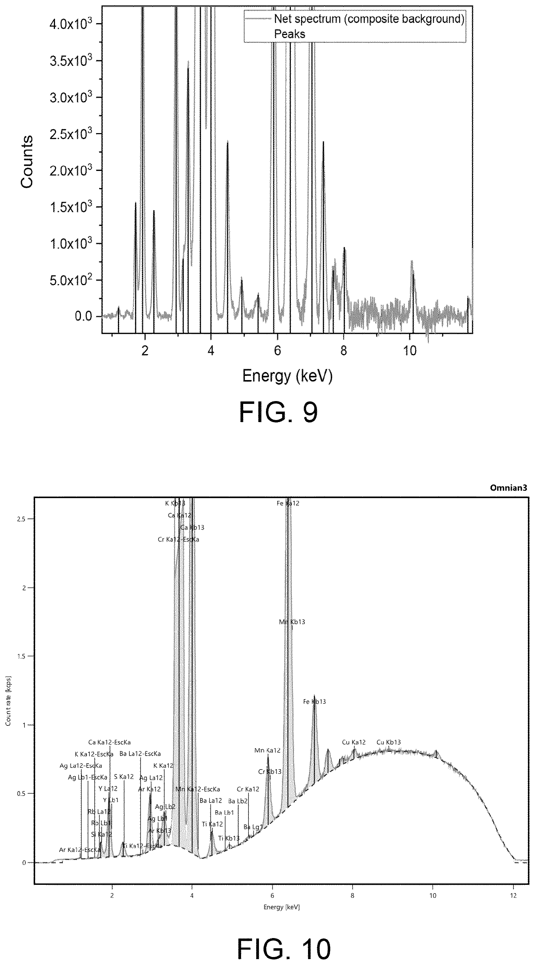

Peaks are then determined (shown in the net spectrum) and from their positions, lines and elements are identified, as shown in Figure 9. The deconvolution input is prepared and the elements' lines are input into the deconvolution model together with the estimated background spectrum. As the background radiation has not been underestimated, the correct elements and lines are input into the deconvolution model. Deconvolution is therefore optimal and accurate net intensities are obtained, as depicted in Figure 10

Figures 11 and 12 depicts the identified elements after using only a SNIP background algorithm (i.e. after only the step depicted in Figure 7). As can be seen in Figure 11, far more peaks and consequently elements have been identified. Figure 12 depicts the deconvoluted spectrum. As can be seen, there are several erroneously fitted peaks in Figure 12 compared to the more accurate representation of Figure 10.

Various further aspects and embodiments of the present invention will be apparent to those skilled in the art in view of the present disclosure.

"and/or" where used herein is to be taken as specific disclosure of each of the two specified features or components with or without the other. For example "A and/or B" is to be taken as specific disclosure of each of (i) A, (ii) B and (iii) A and B, just as if each is set out individually herein.

Unless context dictates otherwise, the descriptions and definitions of the features set out above are not limited to any particular aspect or embodiment of the invention and apply equally to all aspects and embodiments which are described.

It will further be appreciated by those skilled in the art that although the invention has been described by way of example with reference to several embodiments. It is not limited to the disclosed embodiments and that alternative embodiments could be constructed without departing from the scope of the invention as defined in the appended claims.

**Claims**

**1.** A method of analysis of detected X-ray spectra in an instrument, comprising:

applying a first iteration of a first background algorithm to the detected X-ray spectrum to determine a first partial background spectrum; subtracting the first partial background spectrum from the detected X-ray spectrum to form a first net spectrum; applying a second iteration of a second background algorithm to the first net spectrum to determine a second partial background spectrum wherein the second background algorithm is different from the first background algorithm; forming an estimated background spectrum comprising linear combination of the first partial background spectrum and the second partial background spectrum;

using the estimated background spectrum as an input into a deconvolution model.

**2.** A method according to claim 1, wherein each of the first background algorithm and the second background algorithm are one of a sensitive non-linear peak clipping algorithm, an iterative fitting function based on a polynomial function (i.e iterative orthogonal polynomials fitting algorithm), a cardinal cubic B-spline fitting functions, and a measured spectrum.

**3.** A method according to either claim 1 or claim 2 further comprising:

subtracting the second partial background spectrum from the first net spectrum to form a second net spectrum;

applying a third iteration of a third background algorithm to the second net spectrum to determine a third partial background spectrum, wherein the estimated background spectrum comprises a linear combination of the the first partial background spectrum, the second partial background spectrum and the third partial background spectrum.

**4.** A method according to any one of the preceding claims wherein the estimated background spectrum comprises a linear combination of the first partial background spectrum and the second partial background spectrum with a background fitting function, the background fitting function comprising at least one of one of a linear polynomial, an exponential polynomial and a set of cubic splines.

**5.** A computer program product for measuring X-ray spectra, the computer program product adapted, when run on a computer connected to and controlling an instrument to carry out the steps of:

applying a first iteration of a first background algorithm to the detected X-ray spectrum to determine a first partial background spectrum;

subtracting the first partial background spectrum from the detected X-ray spectrum to form a first net spectrum;

applying a second iteration of a second background algorithm to the first net spectrum to determine a second partial background spectrum wherein the second background algorithm is different from the first background algorithm;

forming an estimated background spectrum comprising linear combination of the first partial background spectrum and the second partial background spectrum using the estimated background spectrum as an input into a deconvolution model. 6.

A computer program product for measuring X-ray spectra according to claim 5, wherein each of the first background algorithm and the second background algorithm are one of a sensitive non-linear peak clipping algorithm, an iterative fitting function based on a polynomial function, a cardinal cubic B-spline fitting functions or a measured spectrum.

**7.** A computer program product according to either claim 5 or claim 6, the method further comprising:

subtracting the second partial background spectrum from the first net spectrum to form a second net spectrum;

applying a third iteration of a third background algorithm to the second net spectrum to determine a third partial background spectrum, wherein the estimated background spectrum comprises a linear combination of the first partial background spectrum, the second partial background spectrum and the third partial background spectrum.

**8.** A computer program product for measuring X-ray spectra according to any one of claims 5 to 7, wherein the estimated background spectrum comprises a linear combination of the first partial background radiation and the second partial background radiation with a background fitting function, the background fitting function comprising at least one of one of a linear polynomial, an exponential polynomial and a set of cubic splines.

**9.** Apparatus for measuring X-ray spectra, the apparatus comprising an instrument for measuring X-ray scattering and a controller arranged to control the instrument to carry out the steps of:

apply a first iteration of a first background algorithm to the detected X-ray spectrum to determine a first partial background spectrum;

subtract the first partial background spectrum from the detected X-ray spectrum to form a first net spectrum;

apply a second iteration of a second background algorithm to the first net spectrum to determine a second partial background spectrum wherein the second background algorithm is different from the first background algorithm;

form an estimated background spectrum comprising linear combination of the first partial background spectrum and the second partial background spectrum

using the estimated background spectrum as an input into a deconvolution model.

**10.** Apparatus according to claim 9, wherein each of the first background algorithm and the second background algorithm are one of a sensitive non-linear peak clipping algorithm, an iterative fitting function based on a polynomial function, a cardinal cubic B-spline fitting function and a measured spectrum.

**11.** Apparatus according to either claim 9 or claim 10 the controller being further configured to:

    subtracting the second partial background spectrum from the first net spectrum to form a second net spectrum;
    applying a third iteration of a third background algorithm to the second net spectrum to determine a third partial background spectrum, wherein the estimated background spectrum comprises a linear combination of the first partial background spectrum, the second partial background spectrum and the third partial background spectrum.

**12.** Apparatus according to any one of the preceding claims wherein the estimated background spectrum comprises a linear combination of the first partial background spectrum a second partial background spectrum and a background fitting function, the background fitting function comprising at least one of one of a linear polynomial, an exponential polynomial and a set of cubic splines.

10 → Measure
spectrum

11 → Apply first
background
algorithm

12 → Subtract first
background
spectrum

13 → Apply second
background
algorithm

14 → Estimate background
specturm using first
and second partial
background spectrum

15 → Use background spectrum in
deconvolution to determined
net intensities

# FIG. 1

FIG. 2

FIG. 3

Spectra viewer

------------ second partial background spectrum

FIG. 4

Spectra viewer

----------------- composite background spectrum

FIG. 5

FIG. 6

FIG. 7

FIG. 8

FIG. 9

FIG. 10

FIG. 11

FIG. 12

Europäisches
Patentamt

European
Patent Office

Office européen
des brevets

## EUROPEAN SEARCH REPORT

**Application Number**

EP 24 16 9034

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ZALUZEC ET AL: "Processing and quantification of X-ray Energy-Dispersive Spectra in the Analytical Electron Microscope", ULTRAMICROSCOPY, ELSEVIER, AMSTERDAM, NL, vol. 28, no. 1-4, 1 April 1989 (1989-04-01), pages 226-235, XP024462416, ISSN: 0304-3991, DOI: 10.1016/0304-3991(89)90300-8 [retrieved on 1989-04-01] * page 97, left-hand column, line 24 - page 97, left-hand column, line 29; figures 14-17 * * page 100, left-hand column, line 8 - page 100, left-hand column, line 23 * | 1-12 | INV. G01N23/22 |
| A | ENGELHARD MARK H ET AL: "Introductory guide to backgrounds in XPS spectra and their impact on determining peak intensities", JOURNAL OF VACUUM SCIENCE, AMERICAN INSTITUTE OF PHYSICS, 2 HUNTINGTON QUADRANGLE, MELVILLE, NY 11747, vol. 38, no. 6, 23 September 2020 (2020-09-23), XP012250359, ISSN: 0734-2101, DOI: 10.1116/6.0000359 [retrieved on 2020-09-23] * page 228, left-hand column, line 31 - page 228, left-hand column, line 35 * | 1-12 | TECHNICAL FIELDS SEARCHED (IPC)  G01N |

-/--

The present search report has been drawn up for all claims

| Place of search | Date of completion of the search | Examiner |
|---|---|---|
| The Hague | 30 September 2024 | Stavroulakis, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

**Application Number**

EP 24 16 9034

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MIROSLAV MORHÁC ET AL: "Peak Clipping Algorithms for Background Estimation in Spectroscopic Data", APPLIED SPECTROSCOPY., vol. 62, no. 1, 1 January 2008 (2008-01-01), pages 91-106, XP055701966, US ISSN: 0003-7028, DOI: 10.1366/000370208783412762 * figures 4, 7 * <br> ----- | 1-12 | |

**TECHNICAL FIELDS SEARCHED (IPC)**

The present search report has been drawn up for all claims

| Place of search | Date of completion of the search | Examiner |
|---|---|---|
| The Hague | 30 September 2024 | Stavroulakis, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

page 2 of 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **STEENSTRUP S**. *J Appl Crystallogr*, 1981, vol. 14, 226